# EUROPÄISCHE PATENTANMELDUNG

(11) **EP 0 875 528 A1**
(43) Veröffentlichungstag der Anmeldung: **04.11.1998**
(21) Anmeldenummer: 98106504.8
(22) Anmeldetag: 08.04.1998
(51) Int. Cl.: C08J 11/24, C08G 18/83

(54) **Verfahren zur Herstellung von Polyurethan-Hartschaumstoffen**

(30) Priorität: 29.04.1997 DE 19718018
(71) Anmelder: BASF AKTIENGESELLSCHAFT, 67056 Ludwigshafen (DE)
(72) Erfinder: Naber, Bernhard, 01987 Schwarzheide (DE); Schmiade, Werner, 49459 Lembruch (DE); Gassan, Michael, 01968 Senftenberg (DE)

(57) **Zusammenfassung**

Gegenstand der Erfindung ist ein Verfahren zur Herstellung von Polyurethan-Hartschaumstoffen durch Umsetzung von
a) Polyisocyanaten
b) Verbindungen mit mindestens zwei mit Isocyanatgruppen reaktiven Wasserstoffatomen in Gegenwart von
c) Katalysatoren,
d) Treibmitteln sowie gegebenenfalls
e) weiteren Hilfsmitteln und/oder Zusatzstoffen,
dadurch gekennzeichnet, daß die Komponente b) mindestens ein Recyclatpolyol, das durch Glykolyse von Polyurethanen entsteht, enthält.

## Beschreibung

Die Erfindung betrifft ein Verfahren zur Herstellung von Polyurethan-Hartschaumstoffen mit verbesserter Wärmestabilität.

Die Herstellung von Polyurethan-Hartschaumstoffen durch Umsetzung von Polyisocyanaten und Verbindungen, die mit Isocyanatgruppen reaktive Gruppen aufweisen, insbesondere Polyolen, ist seit langem bekannt und vielfach in der Literatur beschrieben.

Die üblicherweise hergestellten Polyurethan-Hartschaumstoffe weisen zumeist Langzeitgebrauchstemperaturen um 120°C auf. Diese Langzeitgebrauchstemperaturen sind für die meisten Einsatzgebiete derartiger Schaumstoffe ausreichend. Es gibt jedoch auch Anwendungen, bei denen die Schaumstoffe dauerhaft höheren Temperaturen ausgesetzt sind, beispielsweise bei der Ummantelung von Rohren für die Fernwärmeübertragung. Bei den dort vorherrschenden Temperaturen kommt es bereits nach kurzer Zeit zur Zerstörung der Schaumstoffe, beginnend bei der Rißbildung bis hin zur völligen Zersetzung der Schaumstoffe.

Die Möglichkeit, an Stelle von reinen Polyurethan-Schaumstoffen solche mit Isocyanuratgruppen, sogenannten Polyisocyanurat-Schaume (PIR-Schäume) einzusetzen, scheiterte bislang in der Praxis an der zu geringen Fließfähigkeit der reagierenden Komponenten und der zu hohen Sprödigkeit der PIR-Schaume. Diese Sprödigkeit führt bei Transport und Verlegung so ummantelter Rohre zur Rißbildung und damit zu einer drastischen Verschlechterung der Dämmeigenschaften. Erfahrungsgemäß wird die Langzeitwärmeformbeständigkeit erhöht, wenn als Polyolkomponente hochfunktionelle Polyetherpolyole eingesetzt werden. Derartige Polyole sind allgemein bekannt und werden zumeist durch die Umsetzung hochfunktioneller Startsubstanzen, wie Zuckeralkoholen, mit Alkylenoxiden hergestellt. Aus der hohen Funktionalität ergibt sich eine höhere Vernetzungsdichte der Schaumstoffe, was wahrscheinlich zu der verbesserten Langzeitwärmestabilität führt. Eine weitere Möglichkeit zur Verbesserung der Wärmestabilität der Hartschäume ist die Erhöhung des NCO-Indexes bei der Polyurethan-Herstellung. Dabei kommt es durch die Ausbildung von Allophanat- und Biuretstrukturen im Schaum zu einer Verdichtung des Polyurethan-Netzwerkes. Nachteilig ist jedoch, daß dabei die Ausbildung von Isocyanuratstrukturen nicht ausgeschlossen werden kann, was zu den oben geschilderten Nachteilen führt.

Aufgabe der Erfindung war es, ein Verfahren zur Herstellung von Polyurethan-Hartschaumstoffen zu entwickeln, die bei Temperaturen oberhalb 120°C eine gute Langzeitstabilität aufweisen, ohne daß es zu einer Beeinträchtigung der Verarbeitungseigenschaften bei der Schaumherstellung kommt.

Die Aufgabe konnte erfindungsgemäß gelöst werden durch die Herstellung von Polyurethan-Hartschaumstoffen durch Umsetzung von Polyisocyanaten mit Polyolen, wobei als Polyole Recyclatpolyole eingesetzt werden.

Gegenstand der Erfindung ist demzufolge ein Verfahren zur Herstellung von Polyurethan-Hartschaumstoffen durch Umsetzung von
a) Polyisocyanaten mit
b) Verbindungen mit mindestens zwei mit Isocyanatgruppen reaktiven Wasserstoffatomen in Gegenwart von
c) Katalysatoren,
d) Treibmitteln sowie gegebenenfalls
e) weiteren Hilfsmitteln und/oder Zusatzstoffen,
dadurch gekennzeichnet, daß Komponente b) mindestens ein Recyclatpolyol, das durch Glykolyse von Polyurethanen entsteht, enthält.

Gegenstand der Erfindung sind weiterhin Polyurethan-Hartschaumstoffe, herstellbar nach dem erfindungsgemäßen Verfahren. Gegenstand der Erfindung ist weiterhin die Verwendung von Recyclatpolyolen zur Herstellung von Polyurethan-Hartschaumstoffen mit erhöhter Wärmeformbeständigkeit.

Die erfindungsgemäß verwendeten Recyclatpolyole werden durch an sich bekannte Glykolyse von Polyurethanen mit kurzkettigen, insbesondere zwei- und dreifunktionellen Alkoholen hergestellt. Besonders vorteilhaft sind Recyclatpolyole, die in Anwesenheit von Glycidylethern hergestellt wurden und einen sehr niedrigen Gehalt an aromatischen Aminen aufweisen. Die Herstellung derartiger Verbindungen wird in EP-A-592 952 beschrieben. Weiterhin hat es sich als vorteilhaft erwiesen, solche Recyclatpolyole für das erfindungsgemäße Verfahren einzusetzen, die durch Glykolyse von Polyurethan-Hartschaum hergestellt wurden.

Die Recyclatpolyole werden vorzugsweise in einer Menge von 10 bis 50 Gew.-%, bezogen auf die Summe der Komponenten b bis c, eingesetzt. Der Einsatz geringerer Mengen an Recyclatpolyolen bewirkt nur eine geringe Verbesserung der Langzeitwärmestabilität, bei Zusatz größerer Mengen kommt es zu einer Verschlechterung der übrigen mechanischen Eigenschaften der Schaumstoffe.

Im Gegensatz zu DE-A-44 11 864, wo der Einsatz von Recyclatpolyolen aus Polyurethan-Weichschaumstoffen zur Herstellung von offenzelligen Polyurethan-Hartschaumstoffen beschrieben wird, die aufgrund Offenzelligkeit für die Wärmeisolation unbrauchbar sind, liefert das erfindungsgemäße Verfahren geschlossenzellige Schäume mit einer sehr geringen Wärmeleitfähigkeit und einer guten Langzeitwärmebeständigkeit.

Haupteinsatzgebiet der nach dem erfindungsgemäßen Verfahren hergestellten Polyurethan-Hartschaumstoffe ist die Ummantelung von Rohren, insbesondere Fernheizungsrohren für Wohn- und Industriegebiete oder Rohrleitungen zum Transport von petrochemischen Produkten über weite Entfernungen (Pipelines). Für diesen Einsatzzweck wird von den Schäumen eine Langzeitwärmestabilität bei hohen Temperaturen über mindestens 30 Jahre gefordert. Die Temperaturen der in dieser Rohre transportierten Medien liegen bei mindestens 120°C, häufig über 140°C. Zur Zeitverkürzung der Prüfung der Langzeitwärmestabilität der Schaumstoffe wurde die weiter unten beschriebene Prüfmethode EN 253 entwickelt, die Aussagen zum Langzeitverhalten zuläßt.

Das erfindungsgemäße Verfahren ermöglicht nicht nur eine Verbesserung der Langzeitwärmestabilität der Hartschaumstoffe, sondern auch eine wertsteigernde Wiederverwendung von z.B. Produktionsabfällen der Polyurethan-Herstellung oder von gebrauchtem Polyurethan durch Glykolyse und Zuführung der Glykolysate in den Polyurethan-Herstellungsprozeß.

In den übrigen Einsatzkomponenten des erfindungsgemäßen Verfahrens ist im einzelnen folgendes zu sagen:
a) Als Polyisocyanate können die üblichen und bekannten gegebenenfalls modifizierten Polyisocyanate verwendet werden. Für das erfindungsgemäße Verfahren werden insbesondere aromatische Polyisocyanate eingesetzt, beispielsweise Toluylendiisocyanat (TDI), vorzugsweise Diphenylmethandiisocyanat (MDI), insbesondere Gemische aus Diphenylmethandiisocyanat und Polyphenylenpolymethylenpolyisocyanaten (Roh-MDI). Die Isocyanate können auch durch Einbau von Urethan-, Allophanat-, Uretdion- oder andere Gruppen modifiziert werden,
b) Als Verbindungen mit mindestens zwei mit Isocyanatgruppen reaktiven Wasserstoffatomen können Polyamine, vorzugsweise jedoch Polyole eingesetzt werden. Unter den Polyolen sind Polyesterole und insbesondere Polyetherole bevorzugt. Besonders bevorzugt sind die üblicherweise zur Herstellung von Polyurethan-Hartschäumen eingesetzten 3- oder höherfunktionellen Polyetherole. Diese werden zumeist hergestellt durch Anlagerung niederer Alkylenoxide, insbesondere Ethylenoxid und/oder Propylenoxid, an mehrfunktionelle Startsubstanzen. Als Startsubstanzen für die Herstellung von Hartschaumpolyetherolen werden insbesondere aromatische Amine, wie Toluylendiamin (TDA) oder Diphenylmethandiamin (MDA) und seine höheren Homologen, sowie hochfunktionelle Alkohole, wie Zuckeralkohole, Stärke, insbesondere Sucrose und/oder Sorbit, eingesetzt. Die üblichen Polyetherole für Polyurethan-Hartschaumstoffe haben zumeist eine Funktionalität von 3 bis 8 und eine Hydroxylzahl von 200 bis 800 mg KOH/g.

Als Katalysator (c) können die üblichen und bekannten Polyurethan-Katalysatoren eingesetzt werden. Bevorzugt sind tertiäre Amine, beispielsweise Triethylamin oder Dimethylcyclohexylamin, Diazabicyclo[2.2.2.]octan (DABCO).

Als Treibmittel d) können sowohl physikalisch als auch chemisch wirkende Treibmittel eingesetzt werden. Als chemisch wirkendes Treibmittel wird insbesondere Wasser eingesetzt, das bei der Reaktion mit den Isocyanatgruppen Kohlendioxid abspaltet. Das Wasser wird vorwiegend in einer Menge von ca. 2 Gew.-%, bezogen auf die Summe der Komponenten b) bis d), eingesetzt.

Als physikalisch wirkende Treibmittel werden zumeist niedrigsiedende inerte Flüssigkeiten eingesetzt. Bevorzugt sind Kohlenwasserstoffe, die gegebenenfalls halogeniert sein können. Insbesondere bevorzugt sind aliphatische und/oder cycloaliphatische Kohlenwasserstoffe mit 3 bis 8 Kohlenstoffatomen.

Als besonders vorteilhaft hat sich der Einsatz von Pentan, insbesondere Cyclopentan, erwiesen, wobei Kombinationen von Cyclopentan und Wasser auf Grund der geringen Wärmeleitfähigkeit der mit diesen Treibmitteln hergestellten Schaumstoffe besonders bevorzugt sind. Die Zugabe der physikalisch wirkenden Treibmittel erfolgt üblicherweise in einer Menge von < 15 Gew.-%, bezogen auf die Summe der Komponenten b) bis e).

Als Hilfsmittel und/oder Zusatzstoffe werden die üblichen und bekannten Flammschutzmittel, Schaumstabilisatoren und/oder Füllstoffe in den bekannten Mengen eingesetzt.

Nähere Angaben zu den Komponenten a) bis c) finden sich beispielsweise im Kunststoffhandbuch Band VII "Polyurethane", Carl-Hanser-Verlag München, 3. Auflage 1993.

Die Erfindung soll an nachfolgenden Beispielen näher erläutert werden.

### Beispiel 1 (Vergleich)

### Polyolkomponente:

- 70 g: eines Polyetherols aus Sorbit und Propylenoxid, Hydroxylzahl 496 mg KOH/g
- 9 g: Polypropylenglykol, Hydroxylzahl 100 mg KOH/g
- 9 g: Polypropylenglykol, Hydroxylzahl 256 mg KOH/g
- 2 g: Dimethylcyclohexylamin
- 2 g: Siliconschaumstabilisator
- 1,8 g: Wasser
- 11 g: Cyclopentan

### Isocyanatkomponente:

Roh-MDI mit einem NCO-Gehalt von 32 % (Lupranat® M20S der BASF AG).

Die Polyolkomponente und die Isocyanatkomponente wurden mit einem NCO-Index von 130 in einer offenen Form zur Reaktion gebracht.

Für den entstandenen Schaumstoff wurde nach EN 253 eine Lebensdauer von 30 Jahren bei 142°C ermittelt.

### Beispiel 2

415 g des Schaumstoffs aus Beispiel 1 wurden mit 519 g Diethylenglykol in Anwesenheit von 65 g Glycidylether bei 210°C umgesetzt. Das entstandene Glykolysat hatte eine Hydroxylzahl von 600 mg KOH/g.

60 Gewichtsteile der Polyolkomponente aus Beispiel 1 und 40 Gewichtsteile des Glykolysats wurden zu einer Polyolkomponente vereinigt und mit der Isocyanatkomponente gemäß Beispiel 1 wie in Beispiel 1 beschrieben, umgesetzt. Für den entstandenen Schaum wurde nach EN 253 eine Lebensdauer von 30 Jahren bei 150°C ermittelt.

### Beispiel 3

Es wurde verfahren wie in Beispiel 2, nur daß die Polyolkomponente aus 80 Gew.-Teilen der Polyolkomponente aus Beispiel 1 und 20 Gewichtsteile Glykolysat bestand.

Für den entstandenen Schaumstoff wurde nach EN 253 eine Lebensdauer von 30 Jahren bei 148°C ermittelt.

### Untersuchung der thermischen Lebensdauer nach EN 253

Die EN 253 verwendet als Untersuchungskriterium die Prüfung der axialen und tangentialen Scherfestigkeit von Verbundrohren bei Mediumrohrtemperaturen von 23°C und 140°C nach einer zeitgerafften Alterung, Alterungsparameter sind 3600 h bei +160°C und/oder 1450 h bei +170°C.

Entsprechend der Norm muß das Rohr nach Alterung folgende mechanische Eigenschaften aufweisen:
- axiale Scherfestigkeit, 23°C: : 0,12 N/mm²
- axiale Scherfestigkeit, 140°C: : 0,08 N/mm²
- tangentiale Scherfestigkeit, 23°C: : 0,20 N/mm²

Bei Einhaltung der vorgenannten Grenzwerte der EN ist eine Lebensdauer-Extrapolation mittels der Arrheniusbeziehung zu niedrigeren Temperaturen möglich, die Steigung der Arrhenius-Geraden ist festgelegt.

## Patentansprüche

1. Verfahren zur Herstellung von Polyurethan-Hartschaumstoffen durch Umsetzung von
a) Polyisocyanaten
b) Verbindungen mit mindestens zwei mit Isocyanatgruppen reaktiven Wasserstoffatomen in Gegenwart von
c) Katalysatoren,
d) Treibmitteln sowie gegebenenfalls
e) weiteren Hilfsmitteln und/oder Zusatzstoffen,
dadurch gekennzeichnet, daß die Komponente b) mindestens ein Recyclatpolyol, das durch Glykolyse von Polyurethanen erhältlich ist, enthält.

2. Verfahren nach Anspruch 1, dadurch gekennzeichnet, daß das Recyclatpolyol durch Glykolyse von Polyurethan-Hartschaumstoffen erhältlich ist.

3. Verfahren nach Anspruch 1 oder 2, dadurch gekennzeichnet, daß das Recyclatpolyol in Gegenwart von Glycidylethern hergestellt wurde.

4. Verfahren nach einem der Ansprüche 1 bis 3, dadurch gekennzeichnet, daß das Recyclatpolyol in Gegenwart von mono- und/oder difunktionellen Glycidylethern hergestellt wurde.

5. Verfahren nach einem der Ansprüche 1 bis 4, dadurch gekennzeichnet, daß das Recyclatpolyol in einer Menge von 10 bis 50 Gew.-%, bezogen auf die Summe der Komponenten b) bis c), eingesetzt wird.

6. Polyurethan-Hartschaumstoffe, herstellbar nach einem der Ansprüche 1 bis 5.

7. Verwendung von Recyclatpolyolen, die durch Glykolyse von Polyurethanen erhältlich sind, zur Herstellung von Polyurethan-Hartschaumstoffen mit hoher Wärmestabilität.

8. Verwendung von Recyclatpolyolen, die durch Glykolyse von Polyurethan-Hartschaumstoffen erhältlich sind, zur Herstellung von Polyurethan-Hartschaumstoffen mit hoher Wärmestabilität.
